(19) Europäisches Patentamt
European Patent Office
Office européen des brevets

(11) **EP 2 343 576 B1**

(12) **FASCICULE DE BREVET EUROPEEN**

(45) Date de publication et mention de la délivrance du brevet:
**11.07.2012 Bulletin 2012/28**

(51) Int Cl.:
***G01V 11/00*** *(2006.01)*

(21) Numéro de dépôt: **10290611.2**

(22) Date de dépôt: **12.11.2010**

(54) **Méthode d'exploitation d'un gisement pétrolier à partir d'une construction d'une carte de faciès représentative du gisement**

Methode zur Ausbeutung eines Ölreservoirs unter Verwendung einer Facieskarte, welche representativ für das Reservoir ist

Method of oil reservoir exploitation employing a facies chart construction which is representative for the reservoir

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2009 FR 0906330**

(43) Date de publication de la demande:
**13.07.2011 Bulletin 2011/28**

(73) Titulaire: **IFP Energies nouvelles**
**92852 Rueil-Malmaison Cedex (FR)**

(72) Inventeurs:
• **Da Veiga, Sébastien**
**75005 Paris (FR)**
• **Le Ravalec, Mickaële**
**92500 Rueil Malmaison (FR)**

(56) Documents cités:
**WO-A2-2009/138290     FR-A1- 2 869 421**
**US-A1- 2006 041 410**

• **ARSLAN I., RIBEIRO M.T., NEAIMI M., HENDRAWAN I.: "Facies Modeling Using Multiple-Point Statistics: An Example from a carbonate Reservoir Section Located in a small Part of a Large Shelf Margin of Arabian Gulf, UAE", SOCIETY OF PETROLEUM ENGINEERS, SPE, 3 novembre 2008 (2008-11-03), - 6 novembre 2008 (2008-11-06), pages 1-9, XP002596420,**
• **ZHANG T., BOMBARDE S., STREBELLE S., OATNEY E.: "3D porosity modeling of a carbonate reservoir using continuous multiple-point statistics simulation", SOCIETY OF PETROLEUM ENGINEERS, SPE, vol. 11, no. 3, 1 septembre 2006 (2006-09-01), pages 375-379, XP008109678,**
• **STREBELLE S., JOURNEL A.G.: "Reservoir Modeling Using Multiple-Point Statistics", SOCIETY OF PETROLEUM ENGINEERS, SPE, 1 janvier 2001 (2001-01-01), pages 97-107, XP008109711,**
• **RAVALEC M., ROGGERO F., FROIDEVAUX R.: "Conditioning Truncated Gaussian Realizations to Static and Dynamic data", SOCIETY OF PETROLEUM ENGINEERS, SPE, décembre 2004 (2004-12), pages 475-480, XP002596421,**

EP 2 343 576 B1

## Description

La présente invention concerne le domaine technique de l'industrie pétrolière, et plus particulièrement la caractérisation des réservoirs pétroliers par construction d'une représentation du réservoir, appelée modèle de réservoir.

En particulier, l'invention concerne une méthode pour construire une carte de faciès, associée au modèle de réservoir. Cette carte est utilisée pour mettre à jour un modèle de réservoir après acquisition de nouvelles mesures au sein du réservoir pétrolier.

L'optimisation et l'exploitation des gisements pétroliers reposent sur une description aussi précise que possible de la structure, des propriétés pétrophysiques, des propriétés fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique.

Ces modèles bien connus et largement utilisés dans l'industrie pétrolière, permettent de déterminer de nombreux paramètres techniques relatifs à la recherche, l'étude ou l'exploitation d'un réservoir, d'hydrocarbures par exemple. En effet, un modèle de réservoir est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes, même si de nouvelles méthodes sont régulièrement développées. Il est donc crucial, dans le domaine pétrolier, de construire un modèle de réservoir aussi précis que possible. Pour ce faire, l'intégration de toutes les données disponibles est indispensable.

Un modèle de réservoir a donc pour vocation de rendre compte, au mieux, de toutes les informations d'un gisement. Un modèle de réservoir est représentatif lorsqu'une simulation de réservoir fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement.

Le calage d'historique ("history matching") consiste à modifier les paramètres d'un modèle de réservoir, tels que les perméabilités, les porosités ou les skins de puits (représentant les endommagements autour du puits), les connections de failles, les faciès..., pour minimiser les écarts entre les données d'historique simulées et mesurées. Les paramètres peuvent être liés à des régions géographiques comme les perméabilités ou porosités autour d'un puits ou plusieurs puits, ou au sein d'un ou plusieurs faciès.

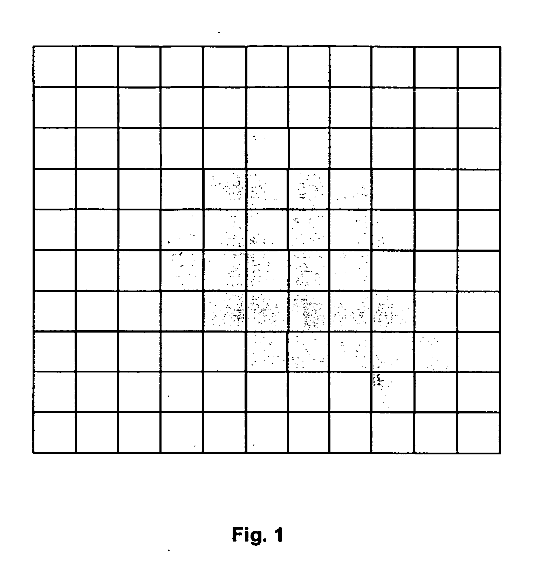

Un modèle de réservoir consiste en une grille à N dimensions (N>0 et en général égale deux ou trois) dont chacune des mailles se voit affecter la valeur d'une propriété caractéristique de la zone étudiée. Il peut s'agir par exemple de la porosité ou de la perméabilité distribuée dans un réservoir. La figure 1 représente une carte de faciès d'un réservoir pétrolier, constituant un modèle de réservoir en deux dimensions. Le quadrillage représente les mailles. Les mailles grises représentent une zone à faciès réservoir, les mailles blanches représentent une zone à faciès non réservoir.

La valeur d'une propriété caractéristique de la zone étudiée est appelée variable régionalisée. Il s'agit d'une variable continue, distribuée dans l'espace, et représentative d'un phénomène physique. Du point de vue mathématique, il s'agit simplement d'une fonction $z(u)$ prenant une valeur en chaque point $u$ (la maille de la grille) d'un domaine d'étude D (la grille représentative du réservoir). Mais la variation de la variable régionalisée dans cet espace est trop irrégulière pour pouvoir être formalisée par une équation mathématique. En fait, la variable régionalisée représentée par $z(u)$ possède à la fois un aspect global, relatif à la structure spatiale du phénomène étudié, et un aspect local aléatoire.

Ce dernier aspect, local aléatoire, peut être modélisé par une variable aléatoire (VA). Une variable aléatoire est une variable qui peut prendre un certain nombre de réalisations $z$ suivant une certaine loi de probabilité. Des variables continues telles que des attributs sismiques (impédance acoustique) ou des propriétés pétrophysiques (saturation, porosité, perméabilité) peuvent être modélisées par des VA. De ce fait, au point $u$, la variable régionalisée $z(u)$ peut être considérée comme la réalisation d'une variable aléatoire Z.

Cependant, pour représenter correctement la variabilité spatiale de la variable régionalisée, il faut pouvoir prendre en compte le double aspect, à la fois aléatoire et structuré. Une des approches possibles, de type probabiliste, fait appel à la notion de fonction aléatoire. Une fonction aléatoire (FA) est un ensemble de variables aléatoires (VA) définies sur un domaine d'étude D (la grille représentative du réservoir), c'est-à-dire $\{Z(u), u * D\}$, également noté $Z(u)$. Ainsi tout groupe de valeurs échantillonnées $\{z(u_1),...,z(u_n)\}$ peut être considéré comme une réalisation particulière de la fonction aléatoire $Z(u) = \{Z(u_1),...,Z(u_n)\}$. La FA $Z(u)$ permet de prendre en compte à la fois l'aspect localement aléatoire (en $u^*$, la variable régionalisée $z(u^*)$ étant une VA) et l'aspect structuré (via la loi de probabilité spatiale associée à la FA $Z(u)$).

Les réalisations d'une fonction aléatoire fournissent des modèles stochastiques de réservoir. A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scenarii.

La construction d'un modèle stochastique de réservoir peut être décrite de la façon suivante :

- Tout d'abord, on mesure sur le terrain d'une part, des données statiques (diagraphies, mesures sur des échantillons prélevés dans les puits, sismique...) et d'autre part, des données dynamiques (données de production, essais de puits, temps de percée...) dont la particularité est de varier au cours du temps en fonction des écoulements de fluide dans le réservoir.

- Puis, à partir des données statiques, on définit une fonction aléatoire, caractérisée par sa fonction de covariance (ou de façon analogue par son variogramme), sa variance et sa moyenne.

- Par ailleurs on définit un ensemble de nombres aléatoires tirés indépendamment les uns des autres : il peut s'agir, par exemple, d'un bruit blanc Gaussien ou de nombres uniformes. Il existe donc un nombre aléatoire indépendant par maille et par réalisation.

- Enfin, à partir d'un simulateur géostatistique choisi et du jeu de nombres aléatoires, un tirage aléatoire dans la fonction aléatoire est effectué, donnant accès à une réalisation (continue ou discrète) représentant une image possible du réservoir. Classiquement, le tirage aléatoire est fait dans un cadre hiérarchique. En premier lieu, le réservoir est peuplé aléatoirement par une réalisation de la fonction aléatoire associée aux faciès, conditionnellement aux faciès observés ponctuellement. Puis, la porosité est générée aléatoirement sur chacun des faciès, conditionnellement aux données de porosité obtenues sur le faciès considéré. Ensuite, on simule la perméabilité horizontale selon sa fonction aléatoire associée, conditionnellement aux faciès et aux porosités tirées précédemment, ainsi qu'aux mesures de perméabilité effectuées sur le terrain. Enfin, on peuple le réservoir par une réalisation aléatoire de la perméabilité verticale conditionnellement à toutes les simulations précédentes et aux données de perméabilité obtenues ponctuellement.

- A ce stade, les données dynamiques n'ont pas été considérées. Elles sont intégrées dans les modèles de réservoir par le biais d'une optimisation ou d'un calage. On définit une fonction objectif mesurant l'écart entre les données dynamiques mesurées sur le terrain et les réponses correspondantes simulées pour le modèle considéré. Le but du processus d'optimisation est de modifier petit à petit ce modèle pour réduire la fonction objectif. Des techniques de paramétrage permettent de faire ces modifications tout en préservant la cohérence vis-à-vis des données statiques.

Au final, les modèles modifiés sont cohérents vis-à-vis des données statiques et vis-à-vis des données dynamiques. Ces modèles doivent pouvoir être mis à jour complètement : quand de nouvelles données sont disponibles, le modèle doit être modifié pour honorer également ces nouvelles données. Par ailleurs, les techniques de calage et de paramétrage s'améliorent continuellement. Par conséquent, l'ingénieur réservoir a fréquemment besoin de revenir sur des modèles de réservoir élaborés et calés dans le passé. L'objectif est d'affiner ces modèles et de les mettre à jour au regard des données acquises depuis l'époque où le modèle avait été initialement élaboré.

Cependant, une difficulté essentielle demeure pour revenir sur des modèles numériques élaborés dans le passé. En effet, pour appliquer une méthode permettant d'affiner le calage d'une réalisation existante, il faut connaître le jeu de nombres aléatoires qui, lorsqu'il est donné au simulateur géostatistique, fournit le modèle numérique (la réalisation) en question. Or, en règle générale, cette information n'existe plus. De même, le modèle de variogramme (ou covariance), caractérisant la variabilité spatiale dans la zone souterraine de l'attribut représenté et nécessaire pour caractériser la fonction aléatoire, n'est plus connu. Ce dernier point est moins important, car l'étude du modèle numérique existant peut permettre de retrouver ce variogramme.

Par le document FR 2869421, on connaît une méthode permettant de reconstruire des modèles stochastiques numériques, c'est à dire, pour une fonction aléatoire déterminée au préalable, d'identifier un jeu de nombres aléatoires qui, donné en entrée à un simulateur géostatistique, conduit à une réalisation semblable au modèle numérique considéré. Cependant, cette technique s'applique à des variables continues représentatives par exemple de la porosité, c'est à dire au cas d'un réservoir comportant un unique faciès.

L'objet de l'invention est une méthode alternative pour construire une carte en faciès représentative d'un gisement souterrain. L'invention concerne également, une méthode alternative pour exploiter des gisements pétroliers, dans laquelle on réalise des mesures au sein du gisement, on met à jour ladite carte en facies, pour prendre en compte ces mesures, et l'on modifie le schéma d'exploitation du gisement en fonction de la carte mise à jour.

**La méthode selon l'invention**

La méthode selon l'invention pour construire une carte de faciès représentative d'un gisement pétrolier, à partir d'une grille constituée d'un ensemble de mailles et de cartes de propriétés pétrophysiques représentatives du gisement associées à la grille, comporte les étapes suivantes :

a) on définit un ordre de visite des mailles de ladite grille, en déterminant en chaque maille de la grille un degré de discrimination de faciès, et en définissant l'ordre de visite selon un ordre croissant dudit degré ;

b) en chaque maille *i*, suivant ledit ordre de visite, et pour différentes valeurs de faciès k, on calcule une vraisemblance, définie par une probabilité d'obtenir en la maille *i* les valeurs de propriétés pétrophysiques desdites cartes sachant que le faciès en la maille *i* est le faciès *k*, et connaissant d'une part des valeurs de faciès déjà identifiées en des mailles précédemment visitées, et d'autre part les valeurs des propriétés pétrophysiques des mailles précédemment visitées, et

c) on associe à chaque maille *i* de ladite grille une valeur de faciès qui maximise ladite vraisemblance en la maille *i*.

Selon l'invention, on peut définir un ordre de visite des mailles de ladite grille, en calculant en chaque maille de la grille un ratio, entre une probabilité d'observer lesdites cartes de propriétés pétrophysiques si le facies de la maille *i* est le facies le plus probable, et une probabilité d'observer lesdites cartes de propriétés pétrophysiques si le facies de la maille *i* est le deuxième facies le plus probable, et en définissant l'ordre de visite selon un ordre croissant dudit ratio.
On peut calculer la vraisemblance en la maille *i*, en calculant en chaque maille *i* :

- une loi de probabilité jointe des faciès, $P(V_{<i}^{\bullet}, V_i)$, définie comme une probabilité que la valeur du faciès en la maille *i* soit $V_i$, connaissant des valeurs de faciès $V_{<i}^{\bullet}$ déjà identifiées en des mailles précédemment visitées;

- la loi de probabilité jointe des propriétés pétrophysiques, définie comme une probabilité que chaque propriété pétrophysique prenne une valeur donnée $(U_{<i}^1, ..., U_{<i}^L, U_i^1, ..., U_i^L)$ en chaque maille de la grille, connaissant des valeurs de faciès $V_{<i}^{\bullet}$ déjà identifiées en des mailles précédemment visitées et pour une valeur quelconque de faciès $V_i$ en la maille *i* ;

- le produit desdites lois de probabilité.

Selon un mode de réalisation, les propriétés pétrophysiques suivent, pour chaque faciès, des lois de probabilités de paramètres θ inconnus, et on effectue les étapes suivantes:

a) on définit l'ordre de visite des mailles de la grille en appliquant les étapes suivantes :

i) on fixe une première valeur initiale pour chaque paramètre;

ii) on détermine une valeur de faciès la plus probable ;

iii) on estime une seconde valeur pour chaque paramètre en fonction dudit facies déterminé à l'étape ii) ;

iv) on réitère à l'étape ii) jusqu'à la convergence de valeur pour chaque paramètre.

b) en chaque maille i, on calcule la vraisemblance et on associe à chaque maille i de ladite grille la valeur de faciès qui maximise ladite vraisemblance en la maille i.

c) on estime une troisième valeur pour chaque paramètre en fonction dudit facies associé à l'étape b)

d) on réitère à l'étape b) jusqu'à la convergence de valeur pour chaque paramètre ou jusqu'à la convergence du faciès associé.

Selon un mode de réalisation, le nombre total de faciès K est inconnu, on réalise les étapes suivantes:

- on fixe un nombre maximal de faciès $K_{max}$ ;

- pour chaque valeur $k$ comprise entre $1$ et $K_{max}$, on détermine en chaque maille $i$ ladite vraisemblance en la maille $i$ ;

- on détermine le nombre total de faciès $K$, en choisissant la valeur $k$ pour laquelle la vraisemblance est maximale.

Un objet de l'invention concerne également une méthode d'exploitation d'un gisement pétrolier selon un schéma d'exploitation donné, à partir de cartes de propriétés pétrophysiques représentatives du gisement. Selon cette méthode on construit une carte en faciès représentative du gisement, ladite carte comportant une grille dont chaque maille possède une valeur de facies, et on réalise des mesures au sein du gisement permettant de mieux caractériser le gisement. La méthode comporte les étapes suivantes:

- on construit ladite carte en faciès selon la méthode selon l'invention décrite précédemment ;

- on modifie ladite carte pour prendre en compte lesdites mesures, en réalisant une simulation géostatistique contrainte par lesdites mesures, au moyen d'un simulateur géostatistique ;

- on modifie ledit schéma d'exploitation du gisement en tenant compte de ladite carte modifiée ; et

- on exploite ledit gisement en mettant en oeuvre ledit schéma d'exploitation modifié.

Les mesures sont choisies de préférences parmi les données suivantes: des données diagraphiques, des données issues d'analyse de carottes, des données de production.
Le simulateur géostatistique est choisi de préférences parmi les simulateurs suivants : simulateur utilisant la méthode de simulation séquentielle d'indicatrices, simulateur utilisant la méthode des Gaussiennes tronquées, simulateur utilisant la méthode des pluri-Gaussiennes.
Enfin, selon un mode de réalisation, on modifie la carte en appliquant une méthode de déformation graduelle.
D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 représente une carte de faciès d'un réservoir pétrolier.

- La figure 2 illustre les étapes de la méthode selon l'invention pour exploiter des gisements pétroliers.

- La figure 3 illustre l'adaptation nécessaire du schéma d'exploitation suite à la modification de la carte de facies prenant en compte de nouvelles mesures.

**Description détaillée de la méthode**

La méthode selon l'invention permet d'exploiter un gisement pétrolier, pour lequel on possède des cartes de propriétés pétrophysiques, telles que perméabilité, porosité, saturations, .... La méthode permet de construire une carte en faciès représentative du gisement pétrolier, à partir des cartes de propriétés pétrophysiques. Il peut s'agir de faciès lithologiques tels que lithologies calcaire, grès, argile, etc., ou de faciès sismiques, bien connus des spécialistes.
Les cartes sont des grilles, dont chaque maille possède des coordonnées géographiques, et chaque maille est associée à une ou plusieurs propriétés pétrophysiques ou des faciès.
Pour faciliter la compréhension de l'invention, un formalisme mathématique est utilisé pour décrire l'invention. A cette fin, les notations suivantes sont utilisées :

- $L \geq 1$ est le nombre de propriétés pétrophysiques considérées pour l'identification de faciès en chaque maille de la grille

- Pour $l = 1,...,L$, $U^l$ désigne la $l$-ième propriété pétrophysique disponible pour l'identification

- Pour $i = 1,...,n$, $U_i^l$ est la valeur de la $l$-ième propriété pétrophysique observée au point $(x_i, y_i, z_i)$ de la grille. Toutes les valeurs observées sont regroupées dans le vecteur $U^l = (U_i^l)_{i=1,...,n}$ de taille n

- Pour $l = 1,...,L$ et $k = 1,...,K$, $U^{l,k}$ désigne le vecteur composé des données de la l-ième propriété pétrophysique observées sur le faciès $k$

- Pour $i = 1,...,n$, $V_i^\bullet \in \{1,...,K\}$ est le faciès identifié par la méthode au point $(x_i, y_i, z_i)$ de la grille. La carte en faciès identifiée correspond par conséquent à la donnée du vecteur $V^\bullet = (V_i^\bullet)_{i=1,...,n}$ de taille n

- Pour $l = 1,...,L$ et $k = 1,...,K$, $\theta_{l,k}$ est le vecteur des paramètres de la loi de probabilité de la propriété $U^l$ sur le faciès $k$. On note $\theta = (\theta_{l,k})_{l=1,...,L; K=1,...,K}$ le vecteur qui contient tous les paramètres

- Pour un vecteur aléatoire $X$ quelconque, on note $X_{<i} = (X_1,...,X_{i-1})$ le vecteur composé de ces $i$-1-ième premières coordonnées

- Pour un vecteur $X = (X_1,...,X_n)$ de taille $n$ quelconque, $P(X) = P(X_1,...,X_n)$ désigne la loi de probabilité jointe du vecteur $(X_1,...,X_n)$

- Pour m vecteurs $X^1 = (X_1^1,...,X_n^1)$, ..., $X^m = (X_1^m,...,X_n^m)$ de taille n quelconques, $P(X^1,...,X^m)$ désigne la loi de probabilité jointe du vecteur $(X_1^1,...,X_n^1,...,X_1^m,...,X_n^m)$

- Pour m vecteurs $X^1 = (X_1^1,...,X_n^1)$, ..., $X^m = (X_1^m,...,X_n^m)$ de taille n quelconques et un vecteur $Y = (Y_1,..., Y_n)$ de taille n tel que $P(Y) > 0$, on note $P(X^1,...,X^m|Y)$ la loi de probabilité conditionnelle de $(X^1,...,X^m)$ sachant $Y$ définie par

- $P(X^1,...,X^m|Y) = P(X^1,...,X^m|Y) = \dfrac{P(X^1,...,X^m,Y)}{P(Y)}$

Ces notations permettent de reformuler l'objectif de cette étape : identifier la carte en faciès à partir de cartes de données pétrophysiques revient à calculer le vecteur $V^\bullet = (V_i^\bullet)_{i=1,...,n}$ à partir de L vecteurs $U^l = (U_i^l)_{i=1,...,n}$ pour $l = 1,...,L$.

L'étape de construction d'une carte en faciès à partir de cartes de données pétrophysiques se base sur la technique du *"maximum de vraisemblance"*. Le principe de cette technique est le suivant :

- on observe des données générées selon une loi de probabilité spécifiée dépendant de paramètres, dont certains au moins sont inconnus ;
- on estime ces paramètres inconnus au moyen de l'estimateur du maximum de vraisemblance. Celui-ci est obtenu en écrivant la probabilité d'avoir observé les données disponibles (la *vraisemblance*). L'estimation des paramètres consiste alors à déterminer la valeur des paramètres qui maximise cette probabilité.

En mathématique, on appelle vraisemblance, la probabilité d'obtenir un certain ensemble de valeurs observées, dans l'hypothèse où celles-ci suivent une loi de probabilité spécifiée dépendant de paramètres.

Ainsi, on définit la probabilité d'observer les cartes de propriétés pétrophysiques disponibles, et on détermine la répartition de faciès $V^\bullet = (V_i^\bullet)_{i=1,...,n}$ qui maximise cette probabilité.

La vraisemblance *LH* associée aux cartes de propriétés pétrophysiques sachant les paramètres $\theta$ s'écrit, pour une répartition en faciès V quelconque :

$$LH(U^1,...,U^L,V|\theta) \equiv P(U^1,...,U^L,V|\theta) = P(V) \times P(U^1,...,U^L|V,\theta)$$

Identifier le vecteur $V^*$ qui maximise cette quantité consiste en une optimisation en dimension n, la taille de la grille de la carte. En pratique, $n$ est de l'ordre du million, il n'est donc pas possible de mettre en oeuvre une optimisation directe.

La méthode proposée repose sur une optimisation séquentielle de cette vraisemblance en utilisant la formule de Bayes.

Ainsi, l'étape de construction d'une carte en faciès à partir de cartes de données pétrophysiques comporte les étapes suivantes :

a) On choisit un ordre de visite des mailles de la grille

b) En chaque maille $i$ de la grille selon l'ordre de visite :

i. on calcule la vraisemblance en la maille $i$ sachant les données pétrophysiques

$U^1_{\prec i},...,U^L_{\prec i}$ et les valeurs de faciès identifiées $V^\bullet_{\prec i}$ aux mailles précédemment visitées. Cette vraisemblance, pour une valeur $V_i$ quelconque de faciès en $i$, s'écrit :

$$LH(U^1_{\prec i},...,U^L_{\prec i},V^\bullet_{\prec i},U^1_i,...,U^L_i,V_i|\theta) = P(V^\bullet_{\prec i},V_i) \times P(U^1_{\prec i},...,U^L_{\prec i},U^1_i,...,U^L_i|V^\bullet_{\prec i},V_i,\theta).$$

ii. on calcule la valeur $V^\bullet_i$ de $V_i$ qui maximise cette quantité

c) On passe à la maille suivante en respectant l'ordre de visite jusqu'à ce que toutes les mailles soient visitées

Détaillons maintenant les étapes a) et b) de la méthode.

<u>a) Choix d'un ordre de visite des mailles de la grille</u>

L'identification séquentielle du vecteur des faciès $V^*$ dépend fortement de l'ordre de visite sélectionné. Si on commence l'identification en des mailles où les faciès sont peu discriminés (c'est-à-dire des mailles où il n'y a pas de faciès nettement plus probable que les autres), le risque d'identifier le mauvais faciès est grand, et cette erreur se propage alors sur les mailles visitées par l'algorithme séquentiel.

Pour limiter ces risques, on choisit un ordre de visite qui passe d'abord par des mailles où les faciès sont les plus discriminés : on détermine en chaque maille de la grille un degré de discrimination de faciès, et on définit l'ordre de visite selon l'ordre croissant de ce degré.

De façon préférentielle, la méthode proposée pour construire un tel ordre de visite consiste, dans un premier temps, à négliger toutes les corrélations spatiales des faciès, les corrélations spatiales de chaque donnée pétrophysique, ainsi que les corrélations entre les propriétés pétrophysiques elles-mêmes. Quand toutes ces corrélations sont négligées, la vraisemblance se simplifie et il n'est plus nécessaire d'adopter une approche séquentielle. Dans ce cas, l'identification des faciès revient à calculer la vraisemblance $P(V_i) \times \prod_{l=1}^{L} P(U_i^l|V_i,\theta)$ en chaque maille $i$ de la grille indépendamment des autres mailles de la grille.

En chaque maille de la grille, on calcule alors $k^\bullet_i$, la valeur du faciès $V_i$ la plus probable, et $k^{\bullet\bullet}_i$ la deuxième valeur la plus probable. Les mailles où les faciès sont les plus discriminés sont les mailles où le ratio de la vraisemblance pour $V_i = k^\bullet_i$ par la vraisemblance pour $V_i = k^{\bullet\bullet}_i$ est le plus grand. Ce ratio permet de classer les mailles, pour former un ordre de visite, les mailles où ce ratio est le plus grand étant visitées en premier.

b) Calcule de la vraisemblance et du facies qui maximise cette Quantité

On rappelle que la vraisemblance en chaque maille de la grille s'exprime de la façon suivante :

$$LH(U_{<i}^1,...,U_{<i}^L,V_{<i}^{\bullet},U_i^1,...,U_i^L,V_i|\theta) = P(V_{<i}^{\bullet},V_i) \times P(U_{<i}^1,...,U_{<i}^L,U_i^1,...,U_i^L|V_{<i}^{\bullet},V_i,\theta).$$

On doit donc calculer :

- $P(V_{<i}^{\bullet},V_i)$, la loi de probabilité jointe des faciès; et

- $P(U_{<i}^1,...,U_{<i}^L,U_i^1,...,U_i^L|V_{<i}^{\bullet},V_i,\theta)$, la loi de probabilité jointe des propriétés pétrophysiques sachant la répartition optimale des faciès $V_{<i}^{\bullet}$ aux mailles visitées précédemment, et pour une valeur quelconque de faciès $V_i$ au point $i$.

On peut utiliser différentes méthodes pour calculer $P(V_{<i}^{\bullet},V_i)$, la loi de probabilité jointe des faciès:

- Si les cartes de propriétés pétrophysiques n'ont pas été générées à partir d'une carte de faciès, on propose la méthode suivante:

  On fait l'hypothèse que les faciès sont indépendants spatialement, c'est-à-dire que l'on suppose que $P(V_{<i}^{\bullet},V_i) = P(V_{<i}^{\bullet}) \times P(V_i) \propto P(V_i)$ où $P(V_i)$ est alors égale à la proportion du faciès $V_i$ en la maille $i$

- Si les cartes de propriétés pétrophysiques ont été générées à partir d'une carte de faciès (perdue, non connue) à partir d'une méthode connue, on propose les méthodes suivantes:

  - si la procédure de Simulation séquentielle d'indicatrices (SISim) a été employée, on écrit que $P(V_{<i}^{\bullet},V_i) = P(V_{<i}^{\bullet}) \times P(V_i|V_{<i}^{\bullet}) \propto P(V_i|V_{<i}^{\bullet})$ ($P(V_{<i}^{\bullet})$ ne dépend pas de la valeur à optimiser $V_i$. et on estime cette probabilité conditionnelle par krigeage d'indicatrices.
  - si la procédure de Gaussienne tronquée a été employée, cette loi de probabilité jointe ne peut pas être calculée en général, car elle implique de calculer la fonction de répartition d'un vecteur Gaussien de dimension $i$, ce qui n'est pas possible numériquement quand $i$ est trop grand. Dans ce cas, la méthode selon l'invention consiste à rajouter une étape de simulation de variables $Y_i$ de loi Gaussienne tronquée. La loi dé probabilité jointe est alors remplacée par $P(V_i,Y_{<i}) \propto P(V_i|Y_{<i} = P(V_i,Y_{<i}) \propto P(V_i|Y_{<i}) = P(a_{v_i-1} \le Y_i < a_{v_i}|Y_{<i})$ où $Y_i|Y_{<i}$ est une variable Gaussienne monodimensionnelle de moyenne et de variance dépendant de $Y_{<i}$ et explicitées dans l'article suivant :

    P. J. Fernandez, P. A. Ferrari and S. Grynberg, Perfectly random sampling of truncated multinormal distributions, Adv. in Appl. Probab, 39 (2007) 973-990.

  - si la procédure pluri-Gaussienne a été employée, on utilise la même méthode que pour le cas des Gaussiennes tronquées en remplaçant la loi de probabilité jointe par

$$P((Y_i^1,Y_i^2) \in \mathcal{E}_{v_i}|Y_{<i}^1,Y_{<i}^2) = \sum_{j=1}^{n_{v_i}} \varepsilon_j P(a_{v_i-1} \le Y_i^1 < b_{v_i}|Y_{<i}^1) \times P(c_{v_i-1} \le Y_{<i}^2 < d_{v_i}|Y_{<i}^2)$$

où $Y_i^1 \big| Y_{<i}^1$ et $Y_i^2 \big| Y_{<i}^2$ sont des variables Gaussiennes de moyenne et de variance dépendant respectivement de $Y_{<i}^1$ et $Y_{<i}^2$

La loi de probabilité jointe $P(U_{<i}^1,...,U_{<i}^L,U_i^1,...,U_i^L \big| V_{<i}^{\bullet},V_i,\theta)$ dépend de la façon dont ont été générées les propriétés pétrophysiques sur chaque faciès.

Si elles ont été considérées comme indépendantes, on peut écrire la décomposition :

$$P(U_{<i}^1,...,U_{<i}^L,U_i^1,...,U_i^L \big| V_{<i}^{\bullet},V_i,\theta) = \prod_{l=1}^{L} P(U_{<i}^l,U_i^l \big| V_{<i}^{\bullet},V_i,\theta)$$

Si on suppose de plus que chaque propriété pétrophysique est un champ Gaussien pour un faciès donné, on peut écrire :

$$P(U_{<i}^1,...,U_{<i}^L,U_i^1,...,U_i^L \big| V_{<i}^{\bullet},V_i,\theta) = \prod_{l=1}^{L} \prod_{k=1}^{K} f_{l,k}(U_{<i+1}^{l,k};\theta_{l,k})$$

où $f_{l,k}(\cdot;\theta_{l,k})$ est la fonction de densité d'une loi Gaussienne de paramètres $\theta_{l,k}$.

Habituellement, en ingénierie de réservoir, les propriétés pétrophysiques sont générées de manière hiérarchique. Pour un faciès fixé, la porosité (notée par exemple $U^1$) est simulée selon une loi de probabilité donnée, conditionnellement aux porosités observées en certains points. Cette information est introduite dans la loi de probabilité $P(U_{<i}^1,U_i^1 \big| V_{<i}^{\bullet},V_i,\theta)$. L'étape suivante consiste à simuler les perméabilités horizontales (notées par exemple $U^2$ et $U^3$) conditionnellement aux valeurs de perméabilités observées et à la porosité générée précédemment selon une loi de probabilité fixée. Cette information est introduite dans la loi de probabilité $P(U_{<i}^2,U_i^2,U_{<i}^3,U_i^3 \big| U_{<i}^1,U_i^1,V_{<i}^{\bullet},V_i,\theta)$. Enfin, la perméabilité verticale notée $U^4$ est simulée conditionnellement aux perméabilités observées et aux perméabilités simulées selon la loi de probabilité $P(U_{<i}^4,U_i^4 \big| U_{<i}^2,U_i^2,U_{<i}^3,U_i^3,V_{<i}^{\bullet},V_i,\theta)$.

Finalement, la vraisemblance s'écrit dans ce cas :

$$P(U_{<i}^4,U_i^4 \big| U_{<i}^2,U_i^2,U_{<i}^3,U_i^3,V_{<i}^{\bullet},V_i,\theta) \times P(U_{<i}^2,U_i^2,U_{<i}^3,U_i^3 \big| U_{<i}^1,U_i^1,V_{<i}^{\bullet},V_i,\theta) \times P(U_{<i}^1,U_i^1 \big| V_{<i}^{\bullet},V_i,\theta).$$

**Variantes**

Selon un mode de réalisation, les paramètres θ des propriétés pétrophysiques sur chaque faciès sont inconnus. On effectue les étapes suivantes :

a) on définit l'ordre de visite des mailles de la grille en appliquant les étapes suivantes :

i) on fixe une première valeur initiale pour chaque paramètre ;

ii) on détermine une valeur de faciès la plus probable ;

iii) on estime une seconde valeur pour chaque paramètre en fonction du facies déterminé à l'étape ii);

iv) on réitère à l'étape ii) jusqu'à la convergence de valeur pour chaque paramètre.

b) en chaque maille i, on calcule la vraisemblance et on associe à chaque maille i de la grille la valeur de faciès qui maximise la vraisemblance en la maille i.

c) on estime une troisième valeur pour chaque paramètre en fonction du facies associé à l'étape b)

d) on réitère à l'étape b) jusqu'à la convergence de valeur pour chaque paramètre ou jusqu'à la convergence du faciès associé.

Ainsi, on effectue l'identification de manière itérative : on fixe une valeur θ des paramètres initialement, on fait l'identification, on utilise le résultat de l'identification pour estimer les paramètres θ, on utilise cette nouvelle estimation pour refaire une identification, on ré-estime les paramètres, et ainsi de suite jusqu'à la convergence. C'est le principe de l'algorithme EM (*Expectation-Maximization*) introduit dans l'article suivant :

Dempster, N. Laird and D. Rubin, Maximum likelihood from incomplete data via the EM algorithm, Journal of the Royal Statistical Association, Series B 39(1) (1977), 1-38.

Une fois l'ordre de visite obtenu, on utilise le même principe itératif pour les étapes b) et c) de la méthode : on fixe le vecteur θ à la valeur fournie à la dernière itération de l'algorithme EM, on utilise cette valeur pour les étapes b) et c), l'identification permet d'estimer les paramètres θ, on utilise cette estimation pour effectuer de nouveau les étapes b) et c), la nouvelle identification permet de ré-estimer les paramètres, et ainsi de suite jusqu'à convergence. Ici, la convergence de l'algorithme peut être étudiée de deux manières : soit l'estimation du vecteur des paramètres n'évolue plus, soit l'identification des faciès ne change plus entre deux itérations de l'algorithme.

Selon un autre mode de réalisation, le nombre total de faciès K est inconnu. On adopte une fois de plus une approche itérative. On se fixe tout d'abord une valeur $K_{max}$ qui correspond au nombre maximal de faciès que l'on s'autorise, typiquement on choisira $K_{max}$ de l'ordre de la dizaine. Pour chaque valeur de K comprise entre 1 et $K_{max}$, on effectue l'identification (de manière itérative si θ est inconnu), en prenant la précaution de garder la valeur de la vraisemblance finale: La valeur de K qui fournit la vraisemblance finale la plus grande correspond alors au nombre de faciès le plus probable. Ainsi, on réalise les étapes suivantes:

- on fixe un nombre maximal de faciès $K_{max}$ ;

- pour chaque valeur *k* comprise entre *1* et $K_{max}$, on détermine en chaque maille i la vraisemblance en la maillé *i* ;

- on détermine le nombre total de faciès *K*, en choisissant la valeur *k* pour laquelle la vraisemblance est maximale.

**Utilisation de la carte de faciès**

Un autre objet de l'invention concerne une méthode d'exploitation d'un gisement pétrolier selon un schéma d'exploitation donné, à partir de cartes de propriétés pétrophysiques représentatives du gisement. Cette méthode comporte l'utilisation d'une carte en faciès représentative du gisement, construite selon l'invention.

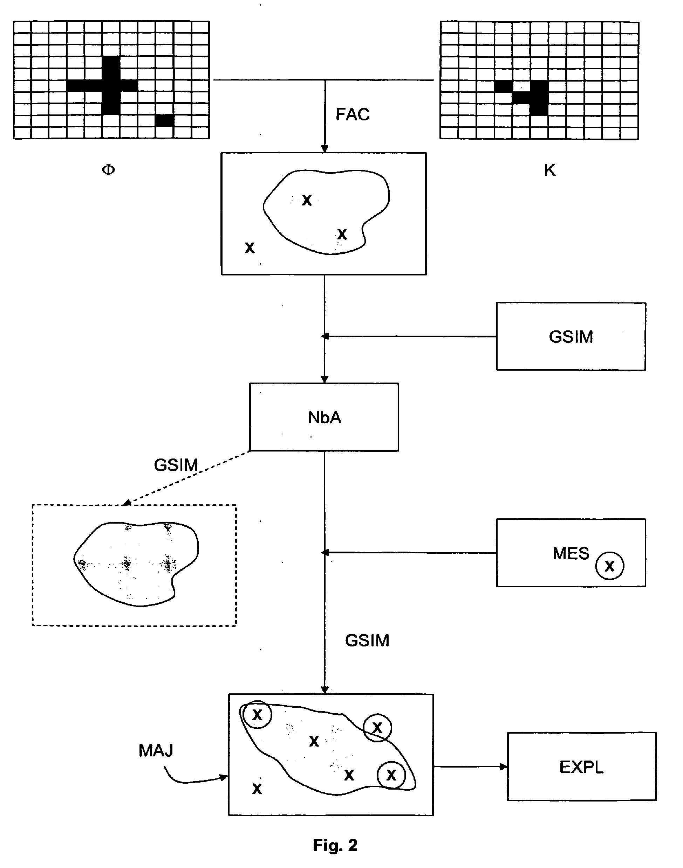

La figure 2 illustre les étapes de la méthode pour exploiter des gisements pétroliers. Elle comporte les étapes suivantes:

1. Construction d'une carte en faciès (FAC)

2. On réalise des mesures au sein du gisement; (MES)

3. On met à jour la carte en faciès pour prendre en compte les mesures (MAJ)

4. On modifie le schéma d'exploitation du gisement et on exploite (EXPL)

1. Construction d'une carte en faciès (FAC)

On utilise pour ce faire la méthode selon l'invention, telle que décrite précédemment. On peut utiliser une carte de porosité (Φ) et une carte de perméabilité (K) par exemple.

2. Réalisation de mesures au sein du gisement

Lors de l'exploitation d'un gisement, on réalise de nouvelles mesures permettant de mieux caractériser le gisement, et donc d'optimiser l'exploitation. Par exemple :

- nouvelles données diagraphiques, permettant de connaître la porosité ou la perméabilité par exemple, tout le long du puits dans lequel sont réalisées les diagraphies;

- nouvelles données issues d'analyse de carottes, permettant de connaître la porosité ou la perméabilité par exemple, tout le long du puits dans lequel sont extraites les carottes;

- nouvelles données de production, permettant de réaliser un calage d'historique. Tant que le réservoir est exploité, de nouvelles données de production sont collectées qui varient avec le temps. Il s'agit par exemple des pressions dans les puits ou des débits en huile, eau ou gaz...

3. Mise à jour de la carte en facies pour prendre en compte les mesures

Pour mettre à jour la carte en faciès on peut réaliser une simulation géostatistique contrainte par lesdites mesures, au moyen d'un simulateur géostatistique. On peut utiliser un des simulateurs géostatistiques suivants : simulateur utilisant la méthode de simulation séquentielle d'indicatrices, simulateur utilisant la méthode des Gaussiennes tronquées, simulateur utilisant la méthode des pluri-Gaussiennes.
Selon un mode de réalisation, on utilise la méthode suivante, comportant deux étapes :

A. Choix d'un simulateur géostatistique

On choisit un simulateur géostatistique. Les méthodes de simulation géostatistique produisent des réalisations de fonction aléatoire à partir d'un jeu de nombres aléatoires, par exemple un bruit blanc Gaussien ou des nombres uniformes indépendants. Ils existent de nombreux simulateurs géostatiques pour générer une carte en faciès. Dans le cadre d'une statistique à deux points, on utilise de préférence les méthodes suivantes :

- la simulation séquentielle d'indicatrices décrite dans : Goovaerts, P., Geostatistics for Natural Resources Evaluation, Oxford University Press, New York (1997)

- la méthode des Gaussiennes tronquées, décrite dans : Galli, A., Beucher, H., Le Loc'h, G. and Doligez, B. (1994), The pros and the cons of the truncated gaussian method, Geostatistical Simulations, 217-233.

- la méthode des pluri-Gaussiennes, décrite dans : Le Loc'h, G. and Galli, A. (1996), Truncated plurigaussian method: theoretical and practical point of view, Geostatistics Wollongong '96 1, E.Y. Baafi and N.A. Schofields eds, Kluwe, 211-222.

Toutes ces procédures impliquent la génération de nombres aléatoires qui, après avoir été transformés selon une technique propre à chacune d'entre elles, permettent de générer la carte en faciès.
On rappelle la procédure de simulation d'une carte en faciès $V = (V_1,...,V_n)$ conditionnellement à des observations $\{v_\alpha, \alpha=1,...,n_\alpha\}$, pour chacune de ces trois simulateurs géostatistiques: Pour toutes ces techniques, les notations communes sont les suivantes :

- $D = \{(x_i, y_i, z_i), i = 1,...,n\}$ est le sous-domaine de $R^3$ discrétisé correspondant au centre des mailles de la grille réservoir

- $K$ est le nombre de faciès différents présents dans le réservoir

- Pour $\alpha = 1,...,n_\alpha$, $v_\alpha \in \{1,...,K\}$ désigne le faciès observé au point $(x_\alpha, y_\alpha, z_\alpha)$

- Pour $i = 1,...,n$, $V_i \in \{1,...,K\}$ désigne le faciès simulé au point $(x_i, y_i, z_i)$

- $\varphi(x) = \dfrac{1}{\sqrt{2\pi}} e^{-\frac{x^2}{2}}$ est la densité de probabilité de la loi Gaussienne standard

- $\Phi(x) = \int_{-\infty}^{x} \varphi(t)dt$ est la fonction de répartition de la loi Gaussienne standard

Simulation séquentielle d'indicatrices (SISim)

La procédure de simulation est la suivante.

i. On transforme les observations (mesures) $v_\alpha$ en un vecteur de $K$ indicatrices, défini par

$$i_{\alpha,k} = \begin{cases} 1 & \text{si } v_\alpha = k \\ 0 & \text{sinon} \end{cases} \text{pour } k=1,...,K.$$

ii. On construit un chemin aléatoire visitant toutes les mailles de la grille réservoir, sauf celles pour lesquelles on a une observation (mesure ou maille déjà simulée) $v_\alpha$

iii. En chaque maille $i$ du chemin :

(a) On estime la probabilité d'occurrence de chaque faciès $k$ par une technique de krigeage d'indicatrices. Les données conditionnelles sont les valeurs des indicatrices définies en (1) auxquelles on rajoute $V_{<i} = (V_1,...,V_{i-1})$, les faciès simulés précédemment
(b) On corrige ces probabilités estimées

(c) On construit la fonction de répartition empirique $F_{V_i|v_\alpha V_{<i}}(t)$ associée à ces probabilités

(d) On génère un nombre aléatoire $p_i$ selon la loi uniforme sur l'intervalle [0,1]
(e) Le faciès simulé au point $i$ est celui qui correspond à l'intervalle auquel p appartient :

$$V_i = k^\bullet \text{ si } F_{V_i|v_\alpha V_{<i}}(k^\bullet - 1) < p \le F_{V_i|v_\alpha V_{<i}}(k^\bullet)$$

(f) On passe à la maille suivante sur le chemin et on répète les étapes (a) à (d)

Simulation par la méthode des Gaussiennes tronquées

La simulation d'une carte en faciès par la méthode de la Gaussienne tronquée consiste à générer des faciès en tronquant une réalisation $Y(x, y, z)$ d'un champ Gaussien stationnaire de moyenne nulle, de variance unité et de corrélogramme $\rho(h)$où $h$ est la distance euclidienne entre deux points. La réalisation $Y(x, y, z)$ peut être obtenue par simulation séquentielle Gaussienne comme décrit dans l'ouvrage suivant : Goovaerts, P., Geostatistics for Natural Resources Evaluation, Oxford University Press, New York (1997); ou par l'algorithme FFT-MA introduit dans l'article suivant : Le Ravalec M., Noetinger B. and Hu L.Y., The FFT moving average (FFT-MA) generator: an efficient numerical method for generating and conditioning Gaussian simulations, Math. Geol., 32(6) (2000).
De manière générique la carte en faciès est donnée par la relation suivante. En chaque maille $i$ de la grille, on définit :

$$V(x_i, y_i, z_i) = \sum_{k=1}^{K} k \mathbf{1}\{a_{k-1} \le Y(x_i, y_i, z_i) < a_k\}$$

où $-\infty = \alpha_0 < \alpha_1 < ... < \alpha_{k-1} < \alpha_k < ... < \alpha_k = +\infty$ sont les seuils de troncature. Leur valeur est déterminée à partir des proportions de chaque faciès. Ces proportions peuvent varier selon les mailles (cas non-stationnaire) ou être constantes sur toute la grille (cas stationnaire). En notant $\pi_k$ la proportion du faciès $k$ pour $k = 1,...,K$, la relation entre les seuils et les proportions est la suivante :

$$a_k(x,y,z) = \Phi^{-1}\left(\sum_{j=1}^{k} \pi_j(x,y,z)\right)$$

pour $k = 1,...,K$. $\Phi^{-1}$ désigne l'inverse de la fonction de répartition de la loi normale standard. La procédure de simulation est la suivante :

    i. A partir des proportions de faciès, on calcule les seuils

    ii. On génère une réalisation $Y$ d'un champ Gaussien selon une des deux méthodes mentionnées précédemment

    iii. On identifie le faciès à attribuer à une maille selon l'intervalle auquel appartient la valeur de Y générée dans cette maille

Si des observations de faciès $\{v_\alpha, \alpha=1,...,n_\alpha\}$ sont disponibles, la réalisation $Y(x,y,z)$ est remplacée par sa version conditionnelle $Y(x,y,z)\big|\{a_{v_\alpha-1} \le Y_\alpha < a_{v_\alpha}, \alpha = 1,...,n_\alpha\}$ qui peut être générée selon la méthode décrite dans l'article suivant :

Freulon, X., and de Fouquet, C., Conditioning a Gaussian model with inequalities, in Geostatistics Troia'92, A. Soares, ed., Kluwer Academic Publishers, Dordrecht, The Netherlands, 201-212 (1993).

Simulation par la méthode des pluri-Gaussiennes

L'approche pluri-Gaussienne est une extension de la méthode des Gaussiennes tronquées dans le sens où elle consiste à tronquer plusieurs champs Gaussiens. Cette procédure a été introduite pour ajouter de la flexibilité dans la modélisation des transitions entre faciès : elle permet de modéliser une grande variété d'environnements géologiques. La méthode proposée est décrite ici dans le cas le plus simple de génération pluri-Gaussienne : seuls deux champs Gaussiens indépendants sont considérés. L'extension de la méthode au cas de plusieurs champs Gaussiens qui peuvent être corrélés est directe.

On considère donc deux champs Gaussiens stationnaires standards indépendants $Y^1$ et $Y^2$ de corrélogrammes respectifs $\rho_1(h)$ et $\rho_2(h)$. Les transitions entre faciès sont définies par l'intermédiaire de règles de troncature exprimées sous la forme d'un masque de seuillage. Les axes principaux du masque correspondent aux valeurs prises par $Y^1$ et $Y^2$. Des régions, souvent rectangulaires, divisent l'espace $(Y^1, Y^2)$ en sous-domaines, chaque sous-domaine étant associé à un faciès. Les bornes de ces sous-domaines sont les seuils utilisés pour tronquer $Y^1$ et $Y^2$. L'aire des sous-domaines, et par conséquent les seuils, dépendent des proportions des faciès. Dans le cas de proportions non-stationnaires, le masque de seuillage peut évoluer selon la maille considérée.

De manière générique, en notant $\varepsilon_k$ la région rectangulaire associée au faciès $k$ pour $k = 1,...,K$, la carte en faciès est définie par :

$$V(x,y,z) = \sum_{k=1}^{K} k \mathbf{1}\left\{\left(Y^1(x,y,z), Y^2(x,y,z)\right) \in \varepsilon_k\right\}$$

Classiquement les régions $\varepsilon_k$ sont supposées rectangulaires. Il est possible aussi de considérer des sous-domaines associés à un faciès donné sous la forme de l'union de plusieurs régions rectangulaires :

$$\varepsilon_k = \bigcup_{j=1}^{n_k} \varepsilon_{j,k} \quad \text{avec } \varepsilon_{j,k} = \left\{(x,y) \in R^2, a_{j,k} \le x < b_{j,k}, c_{j,k} \le y < d_{j,k}\right\}$$

La procédure de simulation est donc la suivante :

i. A partir des proportions de faciès et du masque de seuillage, on calcule les seuils

ii. On génère deux réalisations Y1 et Y2 de champs Gaussiens par simulation séquentielle de Gaussienne ou par la méthode FFT-MA

iii. On identifie le faciès à attribuer à une maille selon les valeurs de Y1 et Y2 générées pour cette maille

<u>B. Identification d'un jeu de nombres aléatoires pour reconstruire la carte initiale</u>

On reconstruit la carte en faciès à partir de la procédure de génération choisie à l'étape A. Il s'agit d'identifier des nombres aléatoires qui, si on les utilise dans la procédure de génération, produisent la carte de faciès initiale considérée.

Selon l'invention, on identifie un jeu de nombres aléatoires (NbA) permettant de reconstruire la carte initiale en en inversant l'algorithme de génération de nombre aléatoire dudit simulateur géostatistique (PSIM) choisi. On considère que la carte initiale a été obtenue au moyen de ce simulateur géostatique. On connait le résultat (F) de ce simulateur en chaque point de la carte : il s'agit de la carte initiale elle-même. Il suffit alors d'inverser ce résultat :

$$GSIM(NbA) = F \Rightarrow NbA = GSIM^{-1}(F)$$

Ce procédé d'inversion est illustré pour chacun des simulateurs géostatistiques de l'étape A.

***Reconstruction pour la simulation séquentielle d'indicatrices***

La méthode de reconstruction proposée ici vise, à partir d'une carte en faciès $V = (V_1,...,V_n)$, à reconstruire un ensemble de nombres aléatoires $(p_1,...,p_n)$ qui, s'ils sont utilisés dans la procédure SISim, produisent la carte en faciès originale $V = (V_1,...,V_n)$. La méthode proposée est la suivante.

(1) On transforme les observations $v_\alpha$ (mesure et/ou maille déjà simulée) en un vecteur de $K$ indicatrices, défini par :

$$i_{\alpha,k} = \begin{cases} 1 & \text{si } v_\alpha = k \\ 0 & \text{sinon} \end{cases} \qquad \text{pour } k=1,...,K.$$

(2) On construit un chemin aléatoire visitant toutes les mailles de la grille

(3) En chaque maille $i$ du chemin :

(a) On estime la probabilité d'occurrence de chaque faciès $k$ par une technique de krigeage d'indicatrices. Les données conditionnelles sont les valeurs des indicatrices définies en (1) auxquelles on rajoute $V_{<i} = (V_1,...,V_{i-1})$, les faciès simulés précédemment

(b) On normalise ces probabilités estimées

(c) On construit la fonction de répartition empirique $F_{V_i|v_\alpha V_{<i}}(t)$ ($t$) associée à ces probabilités

(d) On génère un nombre aléatoire $p_i$ selon la loi uniforme sur l'intervalle $\left[ F_{V_i|v_\alpha V_{<i}}(V_i - 1), F_{V_i|v_\alpha V_{<i}}(V_i) \right]$

(e) On passe à la maille suivante sur le chemin et on répète les étapes (a) à (d)

Par construction lors de l'étape (d), le vecteur $(p_1,...,p_n)$ est asymptotiquement distribué selon une loi uniforme sur l'intervalle [0,1]. Si l'on utilise le même chemin aléatoire et les nombres aléatoires uniformes donnés par notre méthode dans la procédure SISim, on est assuré de générer la même carte en faciès que l'originale. Ainsi, l'ensemble

des nombre aléatoire $p_i$ calculés à l'étape (d) constitue le jeu de nombre aléatoire recherché.

La solution obtenue avec notre méthode n'est pas unique : d'autres nombres aléatoires et d'autres chemins peuvent générer la même carte en faciès.

### *Reconstruction pour la Gaussienne tronquée*

La méthode de reconstruction proposée vise, à partir d'une carte en faciès $V = (V_1,...,V_n)$ connue, à générer une réalisation Y d'un champ Gaussien stationnaire standard de corrélogramme donné $\rho(h)$ qui, lorsqu'on la tronque avec les seuils $\{\alpha_k, k = 1,...,K\}$, produit la même carte en faciès que l'originale. D'un point de vue statistique, générer une réalisation d'un tel champ Gaussien est équivalent à générer un échantillon d'un vecteur multinormal standard $(Y_1,...,Y_n)$ conditionné par $\left\{ a_{V_i - 1} \leq Y_i < a_{V_i}, i = 1,...,n \right\}$. La distribution de ce vecteur est connue sous le nom de distribution multinormale tronquée. Il n'est pas possible de générer un échantillon de cette loi en une seule fois. Notre méthode consiste à utiliser l'approche séquentielle suivante :

(1) On construit un chemin aléatoire visitant toutes les mailles de la grille

(2) En chaque maille $i$, la densité de probabilité de $Y_i$ sachant les contraintes

$$C_{<i} = \left\{ a_{V_{j}-1} \leq Y_j < a_{V_j}, j = 1,...,i \right\}$$ et les valeurs $Y_{<i} = (Y_1,...,Y_{i-1})$ simulées sur les mailles précédemment visitées est :

$$g_i\left(y_i | C_{<i}, Y_{<i}\right) = \frac{\frac{1}{\hat{\sigma}_i} \rho\left(\frac{y_i - \hat{\mu}_i}{\hat{\sigma}_i}\right)}{\Phi\left(\frac{a_{V_{ii}-1} - \hat{\mu}_i}{\hat{\sigma}_i}\right) - \Phi\left(\frac{a_{V_{ii}} - \hat{\mu}_i}{\hat{\sigma}_i}\right)} 1\left\{ a_{V_j-1} \leq Y_j < a_{V_j}, j = 1,...,i \right\}$$

$\hat{\mu}i$ et $\hat{\sigma}i$ sont la moyenne et l'écart-type de krigeage simple de $Yi$ sachant $Y_{<i}$.

(3) On génère une réalisation selon cette densité de probabilité en utilisant un des algorithmes usuels, décrits par exemple dans les documents suivants :

J. Geweke, Efficient simulation from the multivariate normal and Student t-distribution subject to linear constraints, *Computing Science and Statistics:*

*Proceedings of the Twenty-Third Symposium on the Interface* (1991) 571-578.
V. Mazet, D. Brie et J. Idier, Simuler une distribution normale à support positif à partir de plusieurs lois candidates, GRETSI, Louvain-la-neuve, Belgique (2005).
P. J. Fernandez, P. A. Ferrari and S. Grynberg, Perfectly random sampling of truncated multinormal distributions, Adv. in Appl. Probab, 39 (2007) 973-990.

(4) On passe à la maille suivante et on répète les étapes (2) à (3) jusqu'à ce que toutes les mailles aient été visitées.
(5) Lorsque la réalisation Y est connue, Y étant une réalisation continue de corrélogramme donné, on utilise une technique d'identification de nombre aléatoire applicable à des données continues (et non des données discrètes telles que les données de facies), pour identifier un jeu de nombres aléatoires permettant de reconstruire par simulation stochastique la réalisation Y.

De façon avantageuse, l'identification des nombres aléatoires comporte l'utilisation de l'une des techniques suivantes, décrite dans le document FR 2869421 : optimisation, relaxation, filtrage, méthode séquentielle et une combinaison des ces techniques.

La technique d'identification par optimisation comporte une minimisation d'une fonction objectif mesurant l'écart entre le modèle stochastique numérique ($y_{ref}$) et un modèle simulé (y). On utilise le gradient de la fonction objectif par rapport aux nombres aléatoires pour reconstruire le modèle par optimisation.

La technique d'identification par filtrage s'appuie sur le filtre de Wiener. Elle convient pour les simulateurs géostatistiques qui dépendent d'un produit de convolution. Cet algorithme permet en une unique itération de reconstruire des modèles continus. Dans le domaine spectral, la transformée de Fourier s'écrit comme le produit de la transformée du bruit blanc Gaussien (i.e., le jeu de nombres aléatoires) par une fonction F, la racine carrée du spectre de puissance. La mise en place du filtre de Wiener implique qu'on remplace l'inverse de F, $F^1$, par $\overline{F}/(|F|^2+\varepsilon)$ où $\varepsilon$ est une constante suffisamment petite. On estime alors le bruit blanc Gaussien z à partir de :

$$z = TF^{-1}\left(\frac{\overline{F}}{\left(|F|^2 + \varepsilon\right)}Y_{ref}\right).$$

où $TF^1$ signifie : transformée de Fourier inverse

Par construction, la réalisation obtenue par cette méthode respecte les contraintes de seuils imposées, et produit donc après troncature la même carte en faciès que l'originale. La méthode proposée produit une solution qui n'est pas unique et qui peut différer de la réalisation en faciès de référence.

### Reconstruction pour le pluri-Gaussien

La méthode de reconstruction est similaire à celle proposée dans le cas des Gaussiennes tronquées : on génère deux réalisations $Y^1$ et $Y^2$ de champs Gaussiens stationnaires standards de corrélogrammes connus $\rho_1(h)$ et $\rho_2(h)$ qui, lorsqu'on les combine au masque de seuillage donné, produisent une carte en faciès semblable à l'originale $(V_1,...,V_n)$. La méthode proposée est une fois de plus basée sur une approche séquentielle :

(1) On construit un chemin aléatoire visitant toutes les mailles de la grille
(2) En chaque maille $i$, la densité de probabilité de $(Y_i^1, Y_i^2)$ sachant les contraintes

$C_{<i} = \left\{(Y_j^1, Y_j^2) \in \mathcal{E}_{V_j}, j = 1,...,i\right\}$ et les valeurs $\left(Y_{<i}^1, Y_{<i}^2\right)$ simulées sur les mailles précédemment visitées est le mélange suivant :

$$g(y_i^1, y_i^2 \,|\, C_{<i}, Y_{<i}^1, Y_{<i}^2) = \sum_{j=1}^{n_{V_i}} \varepsilon_j g_j^1(y_i^1) g_j^2(y_i^2)$$

avec

$$g_j^1\left(y_i^1\right) = \frac{\dfrac{1}{\hat{\sigma}_i^{(1)}}\rho\left(\dfrac{y_i^1 - \hat{\mu}_i^{(1)}}{\hat{\sigma}_i^{(1)}}\right)}{\Phi\left(\dfrac{b_{j,V_i} - \hat{\mu}_i^{(1)}}{\hat{\sigma}_i^{(1)}}\right) - \Phi\left(\dfrac{a_{j,V_i} - \hat{\mu}_i^{(1)}}{\hat{\sigma}_i^{(1)}}\right)}$$

$$g_j^2\left(y_i^2\right) = \frac{\dfrac{1}{\hat{\sigma}_i^{(2)}}\rho\left(\dfrac{y_i^2 - \hat{\mu}_i^{(2)}}{\hat{\sigma}_i^{(2)}}\right)}{\Phi\left(\dfrac{d_{j,V_i} - \hat{\mu}_i^{(2)}}{\hat{\sigma}_i^{(2)}}\right) - \Phi\left(\dfrac{c_{j,V_i} - \hat{\mu}_i^{(2)}}{\hat{\sigma}_i^{(2)}}\right)}$$

où $\varepsilon_j = \left|\varepsilon_{j,v_i}\right| / \left|\varepsilon_{v_i}\right|$ et $\hat{\mu}_i^{(1)}$ et $\hat{\sigma}_i^{(1)}$ (resp. $\hat{\mu}_i^{(2)}$ et $\hat{\sigma}_i^{(2)}$ )) sont la moyenne et l'écart-type de krigeage simple

de $Y_i^1$ (rèsp. $Y_i^2$) sachant $Y_{<i}^1$ (resp. $Y_{<i}^2$

(3) On génère une réalisation selon cette densité de probabilité

(4) On passe à la maille suivante et on répète les étapes (2) à (3) jusqu'à ce que toutes les mailles aient été visitées.

(5) Lorsque la réalisation Y est connue, Y étant une réalisation continue de corrélogramme donné, on utilise une technique d'identification de nombre aléatoire applicable à des données continues (et non des données discrètes telles que les données de facies), pour identifier un jeu de nombres aléatoires permettant de reconstruire par simulation stochastique la réalisation Y.

Dans le cas des Gaussiennes tronquées et des pluri-Gaussiennes, la méthode de simulation et donc de reconstruction associée implique des champs Gaussiens dont le corrélogramme est supposé connu. Si ce n'est pas le cas, il est nécessaire de les estimer à partir de la carte en faciès. La relation mathématique entre le variogramme de la carte en faciès et le variogramme du ou des champs Gaussiens qui l'ont généré ne peut pas être inversée, comme noté dans l'ouvrage suivant :

- J.-P. Chilès and P. Delfiner, Geostatistics. Modeling Spatial Uncertainty, Wiley Series in Probability and Statistics (1999).

L'approche que nous proposons consiste à proposer une série de variogrammes et de sélectionner celui qui produit le variogramme expérimental le plus proche de celui observé sur la carte en faciès.

L'identification du jeu de nombre aléatoire a pour fonction de pouvoir modifier la carte initiale pour qu'elle respecte les nouvelles mesures effectuées.

C. Mise à jour de la carte en facies

Maintenant que l'on possède un simulateur géostatistique et un jeu de nombre aléatoire qui, appliqué au simulateur, permet de reconstruire la carte initiale, il est possible de modifier la carte avec des méthodes usuelles, telles que :

- la méthode de déformation graduelle, technique de paramétrage géostatistique répondant aux besoins de l'ingénieur et présentée dans l'article suivant :

    Hu, L.-Y., 2000, Gradual déformation and iterative calibration of Gaussian-related stochastic models, Math. Geol., 32(1), 87-108.).

Elle donne en effet la possibilité de reprendre l'étude d'un réservoir et de le modifier partiellement dans les zones où de nouvelles données sont disponibles, comme c'est décrit dans le document suivant :

    Le Ravalec-Dupin, M., Noetinger, B., Hu, L.-Y., and Blanc, G., 2001, Conditioning to dynamic data: an improved zonation approach, Petroleum Geosciences, 7, S9-S16.

Pour déformer localement une zone du réservoir, on applique la méthode de déformation graduelle aux nombres aléatoires des mailles incluses dans cette zone. L'ensemble des nombres, ceux de la zone cible et ceux du domaine encaissant, sont ensuite fournis au simulateur stochastique pour obtenir une nouvelle réalisation représentant le réservoir. Cette nouvelle réalisation diffère de la réalisation de départ dans la zone cible et dans une zone de transition qui entoure la zone cible. L'avantage de revenir aux nombres aléatoires pour faire la déformation graduelle est que l'on préserve la continuité de la réalisation.

4. Modification du schéma d'exploitation du gisement et exploitation du gisement

Une fois la carte en facies mise à jour à partir des mesures nouvellement acquises, le schéma d'exploitation du gisement est reconstruit.

La carte des faciès mise à jour étant cohérente avec l'ensemble des données disponibles, on l'utilise pour prédire les déplacements de fluide dans le réservoir en fonction de différents scenarii de production. On peut alors, pour cette carte de faciès, chercher à optimiser la production future en huile en ajustant par exemple la position des puits, le nombre de puits...

On exploite finalement le gisement en mettant en oeuvre le schéma d'exploitation ainsi adapté. On peut par exemple réaliser des forages, ou modifier des paramètres techniques de production ou d'injection,...

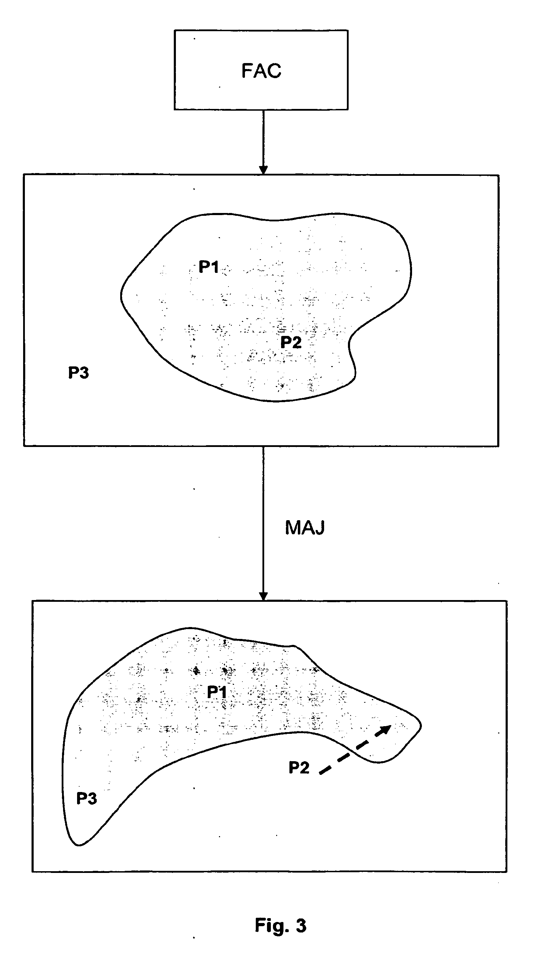

La figure 3 illustre l'adaptation nécessaire du schéma d'exploitation suite à la modification de la carte de facies prenant en compte de nouvelles mesures. En effet, dans le schéma d'exploitation initial du gisement (en gris), le puits P2 était censé atteindre le gisement, et à l'inverse, le puits P3 était censé être foré en dehors du gisement. De ce fait, et par exemple, le puits P3 n'était pas en production, alors que le puits P2 devait être foré plus en profondeur pour atteindre le gisement. Selon la nouvelle carte, on va modifier la trajectoire de P2 pour qu'il atteigne effectivement le gisement. On peut également continuer à forer au niveau de P3, pour atteindre le gisement, et mettre P3 en production.


**Revendications**

1. Méthode pour construire une carte de faciès représentative d'un gisement pétrolier, à partir d'une grille constituée d'un ensemble de mailles et de cartes de propriétés pétrophysiques représentatives dudit gisement associées à ladite grille, **caractérisée en ce que** l'on réalise les étapes suivantes :

    a) on définit un ordre de visite des mailles de ladite grille, en déterminant en chaque maille de la grille un degré de discrimination de faciès, et en définissant l'ordre de visite selon un ordre croissant dudit degré ;
    b) en chaque maille $i$, suivant ledit ordre de visite, et pour différentes valeurs de faciès $k,$ on calcule une vraisemblance, définie par une probabilité d'obtenir en la maille $i$ les valeurs de propriétés pétrophysiques desdites cartes sachant que le faciès en la maille $i$ est le faciès $k$, et connaissant d'une part des valeurs de faciès déjà identifiées en des mailles précédemment visitées, et d'autre part les valeurs des propriétés pétrophysiques des mailles précédemment visitées, et
    c) on associe à chaque maille $i$ de ladite grille une valeur de faciès qui maximise ladite vraisemblance en la maille $i$.

2. Méthode selon la revendication 1, dans laquelle on définit un ordre de visite des mailles de ladite grille, en calculant en chaque maille de la grille un ratio, entre une probabilité d'observer lesdites cartes de propriétés pétrophysiques si le facies de la maille i est le facies le plus probable, et une probabilité d'observer lesdites cartes de propriétés pétrophysiques si le facies de la maille $i$ est le deuxième facies le plus probable, et en définissant l'ordre de visite selon un ordre croissant dudit ratio.

3. Méthode selon l'une des revendications précédentes, dans laquelle on calcule ladite vraisemblance en la maille $i$, en calculant en chaque maille $i$ :

    - une loi de probabilité jointe des faciès, $P(V^{\bullet}_{<i}, V_i)$, définie comme une probabilité que la valeur du faciès en la maille $i$ soit $V_i$, connaissant des valeurs de faciès $V^{\bullet}_{<i}$ déjà identifiées en des mailles précédemment visitées;
    - la loi de probabilité jointe des propriétés pétrophysiques, définie comme une probabilité que chaque propriété pétrophysique prenne une valeur donnée $(U^1_{<i}, ..., U^L_{<i}, U^1_i, ..., U^L_i)$ en chaque maille de la grille, connaissant des valeurs de faciès $V^{\bullet}_{<i}$ déjà identifiées en des mailles précédemment visitées et pour une valeur quelconque de faciès $V_i$ en la maille $i$;
    - le produit desdites lois de probabilité.

4. Méthode selon l'une des revendications précédentes, dans laquelle lesdites propriétés pétrophysiques suivent, pour chaque faciès, des lois de probabilités de paramètres $\theta$ inconnus, et on effectue les étapes suivantes:

    a) on définit l'ordre de visite des mailles de la grille en appliquant les étapes suivantes :

        i) on fixe une première valeur initiale pour chaque paramètre;
        ii) on détermine une valeur de faciès la plus probable ;
        iii) on estime une seconde valeur pour chaque paramètre en fonction dudit facies déterminé à l'étape ii);
        iv) on réitère à l'étape ii) jusqu'à la convergence de valeur pour chaque paramètre.

    b) en chaque maille i, on calcule la vraisemblance et on associe à chaque maille i de ladite grille la valeur de faciès qui maximise ladite vraisemblance en la maille i.
c) on estime une troisième valeur pour chaque paramètre en fonction dudit facies associé à l'étape b)
d) on réitère à l'étape b) jusqu'à la convergence de valeur pour chaque paramètre ou jusqu'à la convergence du faciès associé.

**5.** Méthode selon l'une des revendications précédente, dans laquelle le nombre total de faciès K est inconnu, on réalise les étapes suivantes:

- on fixe un nombre maximal de faciès $K_{max}$ ;
- pour chaque valeur $k$ comprise entre $1$ et $K_{max}$, on détermine en chaque maille $i$ ladite vraisemblance en la maille $i$ ;
- on détermine le nombre total de faciès $K$, en choisissant la valeur $k$ pour laquelle la vraisemblance est maximale.

**6.** Méthode d'exploitation d'un gisement pétrolier selon un schéma d'exploitation donné, à partir de cartes de propriétés pétrophysiques représentatives dudit gisement, dans laquelle on construit une carte en faciès représentative dudit gisement, ladite carte comportant une grille dont chaque maille possède une valeur de facies, et on réalise des mesures au sein dudit gisement permettant de mieux caractériser ledit gisement, **caractérisée en ce qu'**elle comporte les étapes suivantes:

- on construit ladite carte en faciès selon l'une des revendications 1 à 5;
- on modifie ladite carte pour prendre en compte lesdites mesures, en réalisant une simulation géostatistique contrainte par lesdites mesures, au moyen d'un simulateur géostatistique ;
- on modifie ledit schéma d'exploitation du gisement en tenant compte de ladite carte modifiée ; et
- on exploite ledit gisement en mettant en oeuvre ledit schéma d'exploitation modifié.

**7.** Méthode selon la revendication 6, dans laquelle lesdites mesures sont choisies parmi les données suivantes: des données diagraphiques, des données issues d'analyse de carottes, des données de production.

**8.** Méthode selon l'une des revendications 6 à 7, dans laquelle ledit simulateur géostatistique est choisi parmi les simulateurs suivants : simulateur utilisant la méthode de simulation séquentielle d'indicatrices, simulateur utilisant la méthode des Gaussiennes tronquées, simulateur utilisant la méthode des pluri-Gaussiennes.

**9.** Méthode selon l'une des revendications 6 à 8, dans laquelle on modifie ladite carte en appliquant une méthode de déformation graduelle.

**Claims**

**1.** A method for constructing a facies map representative of a petroleum reservoir, from a grid consisting of a set of cells and of petrophysical property maps representative of said reservoir and associated with said grid, **characterized in that** it comprises the following stages:

a) defining a visiting order for the cells of said grid, by determining in each cell of the grid a facies discrimination degree and by defining the visiting order in increasing order of said degree,
b) In each cell $i$, according to sold visiting order, and for various facies values $k$ calculating a likelihood defined by a probability of obtaining In cell the petrophysical property values of said maps, knowing that the facies in cell $i$ is facies $k$, and knowing on the one hand facies values already identified in previously visited cells and, on the other hand, the petrophysical property values of the previously visited cells, and
c) associating with each cell $i$ of said grid a facies value that maximizes said likelihood in cell $l$.

**2.** A method as claimed in claim 1, wherein a visiting order is defined for the cells of said grid by calculating in each cell of the grid a ratio between a probability of observing sold petrophysical property mops if the facies of cell $i$ is the most probable facies and a probability of observing said petrophysical property maps if the facies of cell i is the second most probable facies, and by defining the visiting order in increasing order of said ratio.

**3.** A method as claimed in any one of the previous claims, wherein said likelihood in cell $i$ is calculated by calculating In each cell $i:$

- a joint probability law for the facies, $P(V_{<i}^\star, V_i)$, defined as a probability that the value of the facies In cell $i$ is $V_i$, knowing facies values $V_{<i}^\star$ already identified in previously visited cells,
- the joint probability law for the petrophysical properties, defined as a probability that each petrophysical value takes a given value $(U_{<i}^1,...,U_{<i}^L,U_i^1,...,U_i^L)$ in each cell of the grid, knowing facies values $V_{<i}^\star$ already identified In previously visited cells and for any facies value $V_i$ in cell $I$,
- the product of said probability laws.

4. A method as claimed in any one of the previous claims, wherein said petrophyslcol properties follow, for each facies, probability laws of unknown parameters $0$, and the following stages are carried out:

   a) defining the grid cell visiting order by applying the following stages:

      i) fixing a first initial value for each parameter
      ii) determining a most probable facies value
      iii) estimating a second value for each parameter as a function of said facies determined in stage ii)
      iv) repeating stage ii) until value convergence for each parameter

   b) In each cell $i$, calculating the likelihood and associating with each cell $i$ of said grid the facies value that maximizes said likelihood in cell $i$
   c) estimating a third value for each parameter as a function of said facies associated in stage b)
   d) repeating stage b) until value convergence for each parameter or until convergence of the associated facies.

5. A method as claimed in any one of the previous claims, wherein the total number of facies $K$ is is unknown, and the following stages are carried out:

   - fixing a maximum number of facies $K_{max}$
   - for each value $k$ ranging between 1 and $K_{max}$, determining in each cell $I$ said likelihood in cell $i$
   - determining the total number of facies $K$ by selecting value $k$ for which the likelihood is maximum.

6. A method of developing a petroleum reservoir according to a given development scheme, from petrophysical property maps representative of said reservoir, wherein a facies map representative of said reservoir Is constructed, said map comprising a grid each cell of which has a facies value, and measurements allowing to better characterize said reservoir are taken within said reservoir, **characterized in that** it comprises the following stages:

   - constructing said facies map according to the method as claimed in any one of claims 1 to 5,
   - modifying said map so as to take account of said measurements, by carrying out a geostatistical simulation constrained by said measurements, by means of a geostatistical simulator,
   - modifying said reservoir development scheme by taking account of said modified map, and
   - developing said reservoir using said modified development scheme.

7. A method as claimed in claim 6, wherein said measurements are selected from among the following data: logs, core analysis data, production data.

8. A method as claimed in any one of claims 6 to 7, wherein said geostatistical simulator is selected from among the following simulators: simulator using the sequential indicator simulation method, simulator using the truncated Gaussian method, simulator using the pluri-Gaussian method.

9. A method as claimed in any one of claims 6 to 8, wherein said map is modified by applying a gradual deformation method.


**Patentansprüche**

1. Verfahren zum Konstruieren einer Fazieskarte, die für ein Erdölvorkommen repräsentativ ist, ausgehend von einem Gitter, das aus einer Vielzahl an Maschen gebildet ist, und von Karten petrophysikalischer Eigenschaften, die für das Erdölvorkommen repräsentativ sind und dem Gitter zugeordnet sind, **dadurch gekennzeichnet, dass** die folgenden Schritte ausgeführt werden:

a) das Definieren einer Besuchsreihenfolge der Maschen des Gitters, indem in jeder Masche des Gitters ein Faziesdiskriminationsgrad bestimmt wird und die Besuchsreihenfolge einer aufsteigenden Reihenfolge des Grads nach definiert wird;
b) das Berechnen In jeder Masche $i$, der Besuchsreihenfolge nach und für verschiedene Fazieswerte $k$, einer Wahrscheinlichkeit, die definiert ist durch eine Wahrscheinlichkeit, in der Masche $i$ die Werte petrophysikalischer Eigenschaften der Karten zu erhalten, wobei man weiß, dass die Fazies in der Masche $i$ die Fazies $k$ ist, und einerseits bereits identifizierte Fazieswerte in zuvor besuchten Maschen und andererseits die Werte der petrophysikalischen Eigenschaften der zuvor besuchten Maschen bekannt sind, und
c) das Zuordnen eines Fazieswerts zu jeder Masche $i$ des Gitters, der die Wahrscheinlichkeit in der Masche $i$ maximiert.

2. Verfahren nach Anspruch 1, worin eine Besuchsreihenfolge der Maschen des Gitters definiert wird, indem in jeder Masche des Gitters ein Verhältnis zwischen einer Wahrscheinlichkeit des Beobachtens der Karten petrophysikalischer Eigenschaften, wenn die Fazies der Masche $i$ die wahrscheinlichste Fazies ist, und einer Wahrscheinlichkeit des Beobachtens der Karten petrophysikalischen Eigenschaften, wenn die Fazies der Masche $i$ die zweitwahrscheinlichste Fazies ist, berechnet wird und die Besuchsrelhenfolge einer aufsteigenden Reihenfolge des Verhältnisses nach definiert wird.

3. Verfahren nach einem der vorangegangenen Ansprüche, worin die Wahrscheinlichkeit in der Masche $i$ berechnet wird, indem in jeder Masche i Folgendes berechnet wird:

- eine multivariate Wahrscheinlichkeitsverteilung der Fazies $P(V^*_{<i}, V_i)$, definiert als eine Wahrscheinlichkeit, dass der Fazieswert in der Masche $i$ gleich $V_l$ ist, wobei Fazieswerte $V^*_{<i}$, die in zuvor besuchten Maschen bereits identifiziert wurden, bekannt sind;
- die multivariate Wahrscheinlichkeitsverteilung der petrophysikalischen Eigenschaften, definiert als eine Wahrscheinlichkeit, dass jede petrophysikalische Eigenschaft in jeder Masche des Gitters einen gegebenen Wert $(U^l_{<i}, ..., U^L_{<i}, U^l_i, ..., U^L_l)$ annimmt, unter Kenntnis der bereits identifizierten Fazieswerte $V^*_{<i}$ in zuvor besuchten Maschen und für einen beliebigen Fazieswert $V_i$ in der Masche $i$;
- das Produkt der genannten multivariaten Wahrscheinlichkeitsverteilungen.

4. Verfahren nach einem der vorangegangenen Ansprüche, worin die petrophysikalischen Eigenschaften für jede Fazies Wahrscheinlichkeitsverteilungen unbekannter Parameter $\theta$ folgen und die folgenden Schritte ausgeführt werden:

a) das Definieren der Besuchsreihenfolge der Maschen des Gitters, indem die folgenden Schritte ausgeführt werden:

i) das Festlegen eines ersten Anfangswerts für jeden Parameter;
ii) das Bestimmen eines wahrscheinlichsten Fazieswerts;
iii) das Schätzen eines zweiten Werts für jeden Parameter als Funktion der in Schritt ii) bestimmten Fazies;
iv) das Wiederholen von Schritt ii) bis zur Wertkonvergenz für jeden Parameter;

b) das Berechnen der Wahrscheinlichkeit in jeder Masche i und das Zuordnen des Fazieswerts zu jeder Masche i des Gitters, der die Wahrscheinlichkeit in der Masche i maximiert;
c) das Schätzen eines dritten Werts für jeden Parameter als Funktion der In Schritt b) zugeordneten Fazies;
d) das Wiederholen von Schritt b) bis zur Wertkonvergenz für jeden Parameter oder bis zur Konvergenz der zugeordneten Fazies.

5. Verfahren nach einem der vorangegangenen Ansprüche, worin die Gesamtzahl der Fazies $K$ unbekannt ist und die folgenden Schritte ausgeführt werden:

- das Festlegen einer Höchstzahl an Fazies $K_{max}$;
- das Bestimmen, für jeden zwischen $1$ und $K_{max}$ enthaltenen Wert $k$, in jeder Masche $i$ der Wahrscheinlichkeit in der Masche $i$;
- das Bestimmen der Gesamtzahl der Fazies $K$, indem der Wert $k$ gewählt wird, für den die Wahrscheinlichkeit maximal ist.

**6.** Verfahren zur Erschließung eines Erdölvorkommens gemäß einem gegebenen Erschließungsschema ausgehend von Karten petrophysikalischer Eigenschaften, die für das Vorkommen repräsentativ sind, worin eine Fazieskarte konstruiert wird, die für das Vorkommen repräsentativ ist, wobei die Karte ein Gitter umfasst, bei dem jede Masche einen Fazieswert aufweist, und Messungen im Inneren des Vorkommens durchgeführt werden, die eine bessere Charakterisierung des Vorkommens ermöglichen, **dadurch gekennzeichnet, dass** es die folgenden Schritte umfasst:

- das Konstruierten der Fazieskarte gemäß einem der Ansprüche 1 bis 5;
- das Modifizieren der Karte, um die Messungen zu berücksichtigen, indem mittels eines geostatistischen Simulators eine von den Messungen eingeschränkte geostatistische Simulation durchgeführt wird;
- das Modifizieren des Erschließungsschemas des Vorkommens unter Berücksichtigung der modifizierten Karte; und
- das Erschließen des Vorkommens, indem das modifizierte Erschließungsschema ausgeführt wird.

**7.** Verfahren nach Anspruch 6, worin die Messungen aus den folgenden Daten ausgewählt sind: Daten von Bohrlochlogs, aus der Analyse von Bohrkernen stammende Daten und Produktionsdaten.

**8.** Verfahren nach einem der Ansprüche 6 oder 7, worin der geostatistische Simulator aus den folgenden Simulatoren ausgewählt ist: ein Simulator, der das Verfahren der sequentiellen Indikatorsimulation verwendetet, ein Simulator, der das Truncated-Gauß-Verfahren verwendetet, und ein Simulator, der das Plurigauß- Verfahren verwendetet.

**9.** Verfahren nach einem der Ansprüche 6 bis 8, worin die Karte modifiziert wird, indem ein Verfahren der graduellen Verformung verwendet wird.

**Fig. 1**

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2869421

### Littérature non-brevet citée dans la description

- **J. FERNANDEZ ; P. A. FERRARI ; S. GRYNBERG.** Perfectly random sampling of truncated multinormal distributions. *Adv. in Appl. Probab,* 2007, vol. 39, 973-990
- **DEMPSTER ; N. LAIRD ; D. RUBIN.** Maximum likelihood from incomplete data via the EM algorithm. *Journal of the Royal Statistical Association,* 1977, vol. 39 (1), 1-38
- **GOOVAERTS, P.** Geostatistics for Natural Resources Evaluation. Oxford University Press, 1997
- **GALLI, A. ; BEUCHER, H. ; LE LOC'H, G. ; DOLIGEZ, B.** The pros and the cons of the truncated gaussian method. *Geostatistical Simulations,* 1994, 217-233
- Truncated plurigaussian method: theoretical and practical point of view. **LE LOC'H, G. ; GALLI, A.** Geostatistics Wollongong '96. Kluwe, 1996, 211-222
- **LE RAVALEC M. ; NOETINGER B. ; HU L.Y.** The FFT moving average (FFT-MA) generator: an efficient numerical method for generating and conditioning Gaussian simulations. *Math. Geol.,* 2000, vol. 32 (6

- Conditioning a Gaussian model with inequalities. **FREULON, X. ; DE FOUQUET, C.** Geostatistics Troia'92. Kluwer Academic Publishers, 1993, 201-212
- **V. MAZET ; D. BRIE ; J. IDIER.** Simuler une distribution normale à support positif à partir de plusieurs lois candidates. *GRETSI,* 2005
- **P. J. FERNANDEZ ; P. A. FERRARI ; S. GRYNBERG.** Perfectly random sampling of truncated multinormal distributions. *Adv. in Appl. Probab,* 2007, vol. 39, 973-990
- **J.-P. CHILÈS ; P. DELFINER.** Geostatistics. Modeling Spatial Uncertainty. *Wiley Series in Probability and Statistics,* 1999
- **HU, L.-Y.** Gradual déformation and iterative calibration of Gaussian-related stochastic models. *Math. Geol.,* 2000, vol. 32 (1), 87-108
- **LE RAVALEC-DUPIN, M. ; NOETINGER, B. ; HU, L.-Y. ; BLANC, G.** Conditioning to dynamic data: an improved zonation approach. *Petroleum Geosciences,* 2001, vol. 7, S9-S16